# EUROPEAN PATENT APPLICATION

(11) **EP 3 494 801 A1**
(43) Date of publication of application: **12.06.2019**
(21) Application number: 16911614.2
(22) Date of filing: 03.08.2016
(51) Int. Cl.: A23L 21/10, A23L 2/00

(54) **JELLY BEVERAGE AND METHOD FOR MANUFACTURING JELLY BEVERAGE**

(71) Applicant: The Nisshin OilliO Group, Ltd., Tokyo 104-8285 (JP)
(72) Inventor: ORIHARA Yukiko, Yokosuka-shi Kanagawa 239-0832 (JP)
(74) Representative: Dennemeyer & Associates S.A.
(86) International application number: PCT/JP2016/072830
(87) International publication number: WO 2018/025354

(57) **Abstract**

The present invention addresses the problem of providing an oil-rich jelly drink which shows no separation of an oil and jelly during long-time storage or at eating and can be easily eaten. Provided are: a jelly drink comprising 5-30 mass% of a oil-and/or-fat, a gelling agent and water and having a hardness of 2000-20000 N/m², characterized in that the oil-and/or-fat is a oil-and/or-fat derived from a powdery oil-and/or-fat; and a method for producing a jelly drink having a hardness of 2000-20000 N/m², said method comprising dissolving a powdery oil-and/or-fat and a gelling agent in water under heating and then cooling and solidifying the mixture, characterized in that the amount of the starting powdery oil-and/or-fat is controlled so as to give a oil-and/or-fat content in the obtained jelly drink of 5-30 mass%.

## Description

### Technical Field

The present invention relates to a jelly drink in which oil and jelly do not separate from each other during long-term storage or during ingestion despite the jelly drink containing a large amount of oil-and/or-fats. The jelly drink of the present invention is unlikely to taste oily during ingestion, and thus it can be easily ingested and can easily supply a high amount of energy.

### Background Art

Recently, in accordance with changes in lifestyles, various forms of food products have been developed. In particular, there is a demand for food products from which nutrition can be instantly ingested, and jelly drinks of a spout pouch type are popular because they are easily available, useful, and easily ingested. Conventionally, high-energy jelly drinks are mainly those containing sugars, but, in order to more efficiently supply more energy, lipids (oil-and/or-fats) are preferably contained. However, when lipids (oil-and/or-fats) are contained, an unpleasant feeling such as that caused by an oily aftertaste (oiliness) or an uneasy stomach feeling during ingestion felt in accordance with an increase in the lipid content, and oil-off (oil separation) occurs in the drinks during storage, for example, and thus product design is very difficult.

To date, as high-energy jelly food products containing oil-and/or-fats, a high-nutrient jelly food product for dysphagic patients containing water, vegetable oil-and/or-fat, a sucrose fatty acid ester, and a gelling agent (JP 2011-182785A), a gel-like food product for energy replenishment containing oil-and/or-fat, sugar, and agar (JP 2013-85508A), and the like have been reported, but these technologies have no mention of physical properties of a jelly drink, or oil separation during ingestion and during storage.

### Citation list

### Patent Documents

Patent Document 1: JP 2011-182785A
Patent Document 2: JP 2013-85508A

### Summary of Invention

### Technical Problem

The present invention was made in view of these circumstances, and it is an object thereof to provide a jelly drink with high oil content in which jelly and oil do not separate from each other during long-term storage or during ingestion and that can be easily ingested.

### Solution to Problem

The present inventor accomplished the present invention on the basis of the finding that the above-described problems are solved by adding an oil-and/or-fat in the form of a powdered oil-and/or-fat, and adjusting the hardness of a gel to a specific range using a gelling agent. Specifically, the present invention is directed to the following.
(1) A jelly drink including: 5 to 30% by mass of oil-and/or-fat; a gelling agent; and water, wherein a hardness thereof is 2000 to 20000 N/m², and the oil-and/or-fat is derived from a powdered oil-and/or-fat.
(2) The jelly drink according to (1), wherein a content of the oil-and/or-fat in the powdered oil-and/or-fat is 50 to 85% by mass.
(3) The jelly drink according to (1) or (2), wherein the oil-and/or-fat is a medium chain triglyceride.
(4) A method for producing a jelly drink with a hardness of 2000 to 20000 N/m², including: heating and dissolving a powdered oil-and/or-fat and a gelling agent in water; and then solidifying the solution through cooling, wherein a content of the powdered oil-and/or-fat that is a raw material is adjusted such that a content of the oil-and/or-fat in the obtained jelly drink is 5 to 30% by mass.

### Advantageous Effects of Invention

The present invention provides a jelly drink in which oil and jelly do not separate from each other during long-term storage or during ingestion despite the jelly drink containing a large amount of oil-and/or-fat. The jelly drink of the present invention is unlikely to taste oily during ingestion, and thus it can be easily ingested and can easily supply a high amount of energy.

### Description of Embodiments

Hereinafter, an embodiment of the present invention will be described. Note that the present invention is not limited to the embodiment described below.

### [Jelly Drink]

A jelly drink of the present invention is a food product containing a jelly that is to be crushed before ingestion, wherein the jelly contains an oil-and/or-fat, a gelling agent, and water, and has a hardness of 2000 to 20000 N/m². Furthermore, the jelly drink of the present invention contains an oil-and/or-fat in the form of a powdered oil-and/or-fat, and thus is a suitable as a jelly drink in which oil separation can be prevented from occurring during ingestion and during storage despite being a gel that is soft and can be easily crushed.

The jelly drink of the present invention has a flowability that allows the jelly drink to be poured or sucked without excessive force. More specifically, the jelly drink has a hardness that allows the jelly to be easily crushed by shaking a container before ingestion, or to be crushed by pressing, squeezing, or deforming a flexible container from the outside with fingers.

The hardness of the jelly drink of the present invention is such that a measured value of the hardness of the jelly (gel) in an uncrushed state is 2000 to 20000 N/m² when measured using a rheometer under the conditions that a plunger is in the shape of a solid cylinder with a diameter of 20 mm, the compression speed is 10 mm/sec, a clearance of 5 mm is provided, and the temperature is 20°C. The hardness of the jelly drink of the present invention is preferably 2500 to 15000 N/m², more preferably 3000 to 10000 N/m², and most preferably 4000 to 7000 N/m². If the hardness of the jelly drink of the present invention is within an above-mentioned range, the jelly can be crushed without excessive force, and can be easily ingested as a drink. In the present invention, the hardness of a jelly drink refers to a value obtained by preparing a jelly drink, allowing it to stand, and measuring the hardness of the gelled jelly whose shape is retained.

The jelly drink of the present invention is a food product from which a high amount of energy can be instantly ingested. The amount of calories in the jelly drink of the present invention is preferably 2 kcal/g or more, and more preferably 2.5 to 4 kcal/g. Furthermore, the amount of jelly drink of the present invention ingested in a single sitting is preferably 100 to 250 g.

Hereinafter, components contained in the jelly drink of the present invention will be described in detail.

### [Powdered Oil-and/or-Fat]

A powdered oil-and/or-fat that is used in the present invention has a structure in which fine oil particles (oil-and/or-fat) are coated by sugars, dextrin, milk protein, modified starch, or the like. The powdered oil-and/or-fat that is used in the present invention preferably contains milk protein. If the powdered oil-and/or-fat contains milk protein, the oil-and/or-fat in the jelly drink of the present invention takes on a stably emulsified state. Examples of the milk protein include milk serum protein, casein, sodium caseinate, and the like. The content of milk protein in the powdered oil-and/or-fat is preferably 5 to 25% by mass, more preferably 7 to 20% by mass, and most preferably 8 to 15% by mass.

The powdered oil-and/or-fat that is used in the present invention can be obtained by spray-drying an oil-in-water emulsion containing the above-described components.

The powdered oil-and/or-fat that is used in the present invention is such that the content of oil-and/or-fat in the powdered oil-and/or-fat is preferably 50 to 85% by mass, more preferably 60 to 80% by mass, and most preferably 65 to 75% by mass. If the content of oil-and/or-fat in the powdered oil-and/or-fat is within an above-mentioned range, the content of oil-and/or-fat in the jelly drink of the present invention can be easily increased, and the content of raw materials derived from the powdered oil-and/or-fat other than the oil-and/or-fat can be decreased. Furthermore, if the content of oil-and/or-fat in the powdered oil-and/or-fat is within an above-mentioned range, the oil-and/or-fat in the jelly drink takes on a stably emulsified state, and thus oil separation is unlikely to occur.

### [Oil-and/or-Fat]

There is no particular limitation on the oil-and/or-fat that is used in the present invention, as long as it can be used as a raw material for the powdered oil-and/or-fat, but the oil-and/or-fat is preferably an oil-and/or-fat with a melting point of 35°C or lower because it is easily digested and absorbed after ingestion. Examples of the oil-and/or-fat with a melting point of 35°C or lower include rapeseed oil, soybean oil, corn oil, palm oil, coconut oil, rice oil, sesame oil, cottonseed oil, sunflower oil, safflower oil, linseed oil, perilla oil, olive oil, peanut oil, grape seed oil, macadamia nut oil, hazelnut oil, pumpkin seed oil, walnut oil, camellia oil, tea seed oil, perilla ocymoides seed oil, borage seed oil, rice bran oil, wheat germ oil, and medium chain triglyceride oil (MCT), modified oils such as transesterified oils or fractionated oils of the above-mentioned oils used alone or in a combination of two or more, and the like. Furthermore, as the oil-and/or-fat that is used in the present invention, the above-mentioned oil-and/or-fats may be used in a combination of two or more.

Furthermore, the oil-and/or-fat that is used in the present invention is preferably such that constituent fatty acids thereof contain a medium chain fatty acid because it is promptly digested and absorbed and changed into energy. The medium chain fatty acid is a fatty acid with 8 to 12 carbon atoms (preferably saturated fatty acid with 8 and 10 carbon atoms). Examples of the oil-and/or-fat containing a medium chain fatty acid as a constituent fatty acid include a medium chain triglyceride (hereinafter, also referred to as MCT) whose constituent fatty acids include only a medium chain fatty acid, a medium and long chain triglyceride (hereinafter, also referred to as MLCT) whose constituent fatty acids include a medium chain fatty acid and a long chain fatty acid, and the like, but an MCT is preferable because it can promptly supply energy. If MCT is selected as the oil-and/or-fat that is used in the present invention, MCT in which constituent fatty acids have 8 and 10 carbon atoms are contained and the content of constituent fatty acid with 10 carbon atoms is larger than that with 8 carbon atoms is preferable because an unpleasant feeling in the stomach after ingestion can be reduced. Specifically, with respect to the constituent fatty acids of MCT, the content of fatty acid with 8 carbon atoms is preferably 5 to 45% by mass, more preferably 5 to 40% by mass, and most preferably 5 to 35% by mass. Meanwhile, the content of fatty acid with 10 carbon atoms is preferably 55 to 95% by mass, more preferably 60 to 95% by mass, and most preferably 65 to 95% by mass.

The oil-and/or-fat that is used in the present invention is contained in the form of a powdered oil-and/or-fat. The net content of oil-and/or-fat contained in the jelly drink of the present invention is 5 to 35% by mass. The net content of oil-and/or-fat contained in the jelly drink of the present invention is preferably 10 to 30% by mass, more preferably 12 to 28% by mass, even more preferably 14 to 25% by mass, and most preferably 16 to 22% by mass. If the net content of oil-and/or-fat is within an above-mentioned range, the jelly drink of the present invention can supply a high amount of energy and be easily ingested, and oil separation therein is suppressed.

### [Gelling Agent]

There is no particular limitation on the type and the content of a gelling agent that is used in the present invention, as long as the hardness of the jelly drink of the present invention can be adjusted to a desired hardness. Examples thereof include carrageenan, locust bean gum, agar, deacylated gellan gum, native gellan gum, glucomannan, xanthan gum, alginate, and the like, which may be used in a combination of two or more. If carrageenan and locust bean gum are used, physical properties that allow the jelly drink to be easily ingested are obtained.

### [Water]

There is no particular limitation on water that is used in the present invention, and examples thereof include tap water, well water, purified water, ion-exchanged water, and the like.

### [Other Raw Materials]

The jelly drink of the present invention may contain raw materials other than those described above, within a range that does not inhibit the effects of the present invention. Examples thereof include sugars, acidifiers, vitamins, amino acids, minerals, fruit juices, flavoring substances, dyes, and the like. Furthermore, if an emulsifier is contained, the content thereof is preferably set to less than 1.5% in order to prevent the taste of the jelly drink from deteriorating.

### [Method for Producing Jelly Drink]

A method for producing a jelly drink of the present invention is a method including: adjusting the content of powdered oil-and/or-fat such that the content of oil-and/or-fat in a jelly drink is 5 to 30% by mass; adjusting the content of a gelling agent such that the jelly drink has a hardness of 2000 to 20000 N/m²; heating and dissolving the powdered oil-and/or-fat and the gelling agent in water; and then solidifying the solution through cooling. Specifically, a gelling agent in an amount that allows the jelly drink to have a desired hardness and a powdered oil-and/or-fat in an amount that allows the jelly drink to have a desired content of oil-and/or-fat are heated and dissolved in water, and other raw materials are added thereto and uniformly mixed and dissolved, and the mixture is filled into a container and solidified through cooling, so that a jelly drink of the present invention is obtained. The gelling agent may be mixed with other powder raw materials in advance, and then heated and dissolved in water. The powdered oil-and/or-fat that is used in the present invention is stably emulsified when dissolved in water, and thus it does not particularly have to be emulsified using an emulsifying machine or the like. On the other hand, if a jelly drink contains an oil-and/or-fat itself, it has to be emulsified using an emulsifying machine or the like in order to prevent oil separation and a sense of oiliness during ingestion (oily aftertaste). Moreover, the gelling ability of the gelling agent may decrease due to physical stress during emulsification, which makes it impossible to obtain a gel with a desired hardness.

Examples of the method that can be used for sterilizing the jelly drink of the present invention include a method including filling a jelly drink into a container, tightly sealing the container, and performing heat sterilization, a method including filling a jelly drink into a container while performing heat sterilization, a method including performing heat sterilization before filling a jelly drink into a container, and then aseptically packaging the jelly drink, and the like.

There is no particular limitation on the container for the jelly drink of the present invention, as long as it allows the gel to be crushed at the time of ingestion and be ingested, but the container is preferably a spout pouch because the jelly drink can be easily ingested therefrom.

### Examples

Hereinafter, the present invention will be described in more detail by way of examples, but the present invention is not limited to this.

### [Preparation of Powdered Oil-and/or-Fat]

The temperature of each oil-and/or-fat listed in Table 1 was adjusted to 70°C, so that the oil phase was prepared. Next, sodium caseinate and dextrin were dissolved in water in an amount equivalent to the total mass of an oil-and/or-fat listed in Table 1, the sodium caseinate, and the dextrin, so that an aqueous phase was prepared. Then, the aqueous phase and the oil phase were mixed, after which the aqueous phase and the oil phase were homogenized under a pressure of 150 kg/cm² using a pressure-type homogenizer, so that an oil-in-water emulsion was obtained. The obtained oil-in-water emulsion was spray-dried using a nozzle-type spray-dryer, and thus powdered oil-and/or-fats 1 to 3 each containing 75% by mass of oil-and/or-fat were obtained.

The raw materials listed in Table 1 are as follows.
MCT1: product name "ODO", manufactured by the Nisshin OilliO Group, Ltd., a medium chain triglyceride whose constituent fatty acids are *n*-octanoic acid (with 8 carbon atoms) and *n*-decanoic acid (with 10 carbon atoms) contained in a mass ratio of 75 : 25
MCT2: product manufactured by the Nisshin OilliO Group, Ltd., a medium chain triglyceride whose constituent fatty acids are *n*-octanoic acid (with 8 carbon atoms) and *n*-decanoic acid (with 10 carbon atoms) contained in a mass ratio of 30 : 70
Rapeseed oil: product name "Refined rapeseed oil (S)", manufactured by the Nisshin OilliO Group, Ltd.
Sodium caseinate: product name "Sodium caseinate", manufactured by San-Ei Gen F.F.I., Inc.
Dextrin: product name "Pinedex #2", manufactured by Matsutani Chemical Industry Co., Ltd.

**Table 1**

| (% By mass) | | Powdered oil-and/or-fat 1 | Powdered oil-and/or-fat 2 | Powdered oil-and/or-fat 3 |
|---|---|---|---|---|
| Oil-and/or-Fat | MCT 1 | 75 | - | - |
| | MCT 2 | - | 75 | - |
| | Rapeseed oil | - | - | 75 |
| Sodium caseinate | | 10 | 10 | 10 |
| Dextrin | | 15 | 15 | 15 |
| Total | | 100 | 100 | 100 |

### [Ungelled Jelly Drink Preparation 1]

First, powders of carrageenan, locust bean gum, trehalose, and sugar that are powder raw materials in contents listed in Tables 2 and 3 were mixed and then dissolved in hot water at 85°C. Next, the solution was kept at 70 to 75°C, and a powdered oil-and/or-fat, a liquid sugar, a concentrated fruit juice, and a citric acid were sequentially and uniformly dissolved therein, so that ungelled jelly drinks were prepared.

### [Measurement of Hardness of Jelly Drink and Calculation of Amount of Calories]

The hardness of each jelly drink was measured as follows. 15 mm of the thus prepared ungelled jelly drink was filled into a container with a diameter of 40 mm and a height of 15 mm and gelled through cooling, after which the temperature of the gel was adjusted to 20°C. Next, measurement was performed using a rheometer (RE-33005, manufactured by Yamaden Co., Ltd.) under the condition that a plunger was in the shape of a solid cylinder with a diameter of 20 mm, the compression speed was 10 mm/sec, a clearance of 5 mm was provided, and compression was performed twice. The amount of calories in the jelly drink was calculated using nutrition calculating software.

### [Jelly Drink Evaluation 1]

A jelly drink was prepared from each of the thus prepared ungelled jelly drinks, and crushing property evaluation, oil separation evaluation, and sensory evaluation were performed. Tables 2 and 3 show the evaluation results.

### (Crushing Property Evaluation)

First, 120 mL of ungelled jelly drink prepared as described above (65 to 70°C) was filled into a 200-mL glass sample bottle, the glass sample bottle was tightly sealed, and the jelly drink was gelled through cooling with running water (tap water) for 30 minutes. The head space in the glass sample bottle at that time was about 40%. The degree of jelly crushed when the glass sample bottle was shaken up and down five times was evaluated through visual observation. The evaluation criteria were as follows.

⊚: Jelly is crushed and flows.
○: Jelly is crushed but does not flow as much as ⊚.
×: Jelly is not crushed.

### (Oil Separation Evaluation 1)

In the procedure of the above-described crushing property evaluation, the oil separation of the jelly in an uncrushed state was evaluated through visual observation. The evaluation criteria were as follows.

○: Oil particles are not seen on the jelly surface and syneresis portions thereof.
×: Oil particles are seen on the jelly surface or syneresis portions thereof.

### (Oil Separation Evaluation 2)

After the above-described crushing property evaluation, the glass sample bottle was allowed to stand for 10 minutes, and oil separation of the crushed jelly was evaluated through visual observation. The evaluation criteria were as follows.

○: Oil particles are not seen on the jelly surface and syneresis portions thereof.
×: Oil particles are seen on the jelly surface or syneresis portions thereof.

### (Sensory Evaluation)

After the above-described oil separation evaluation, the crushed jelly was sucked through a straw, and sensory evaluation was performed. The evaluation criteria were as follows.

⊚: The jelly can be easily ingested because it has an appropriate hardness and does not taste oily.
○: The jelly can be easily ingested because it does not taste oily although it is soft and its texture is poor.
×: The jelly cannot be easily ingested because it is soft and sticky or because it tastes oily.

**Table 2**

| (% By mass) | | Ex. 1 | Ex. 2 | Ex. 3 | Ex. 4 | Ex. 5 |
|---|---|---|---|---|---|---|
| Powdered oil-and/or-fat 1 | | 6.67 | 20.00 | 26.67 | 33.33 | 40.00 |
| Carrageenan | | 0.15 | 0.15 | 0.15 | 0.15 | 0.15 |
| Locust bean gum | | 0.15 | 0.15 | 0.15 | 0.15 | 0.15 |
| Sugar | | 2.00 | 2.00 | 2.00 | 2.00 | 2.00 |
| Trehalose | | 10.00 | 10.00 | 10.00 | 10.00 | 10.00 |
| Concentrated fruit juice | | 2.00 | 2.00 | 2.00 | 2.00 | 2.00 |
| Liquid sugar | | 5.00 | 5.00 | 5.00 | 5.00 | 5.00 |
| Citric acid | | 0.10 | 0.10 | 0.10 | 0.10 | 0.10 |
| Water | | 73.93 | 60.60 | 53.93 | 47.27 | 40.60 |
| Total | | 100.0 | 100.0 | 100.0 | 100.0 | 100.0 |
| Calories (kcal/g) | | 1.15 | 2.17 | 2.68 | 3.19 | 3.70 |
| Content of oil-and/or-fat (% by mass) | | 5 | 15 | 20 | 25 | 30 |
| Hardness (N/m²) | | 5908 | 4277 | 5452 | 3282 | 2861 |
| Evaluation | Crushing property evaluation | ⊚ | ⊚ | ⊚ | ⊚ | ○ |
| | Oil separation evaluation 1 | ○ | ○ | ○ | ○ | ○ |
| | Oil separation evaluation 2 | ○ | ○ | ○ | ○ | ○ |
| | Sensory evaluation | ⊚ | ⊚ | ⊚ | ○ | ○ |

**Table 3**

| (% By mass) | | Ex. 6 | Ex. 7 | Com.Ex. 1 | Com.Ex. 2 |
|---|---|---|---|---|---|
| Powdered oil-and/or-fat 1 | | | | 26.67 | 26.67 |
| Powdered oil-and/or-fat 2 | | 26.67 | | | |
| Powdered oil-and/or-fat 3 | | | 26.67 | | |
| Carrageenan | | 0.15 | 0.15 | 0.05 | 0.30 |
| Locust bean gum | | 0.15 | 0.15 | 0.05 | 0.30 |
| Sugar | | 2.00 | 2.00 | 2.00 | 2.00 |
| Trehalose | | 10.00 | 10.00 | 10.00 | 10.00 |
| Concentrated fruit juice | | 2.00 | 2.00 | 2.00 | 2.00 |
| Liquid sugar | | 5.00 | 5.00 | 5.00 | 5.00 |
| Citric acid | | 0.10 | 0.10 | 0.10 | 0.10 |
| Water | | 53.93 | 53.93 | 54.13 | 53.63 |
| Total | | 100.0 | 100.0 | 100.0 | 100.0 |
| Calories (kcal/g) | | 2.68 | 2.68 | 2.67 | 2.68 |
| Content of oil-and/or-fat (% by mass) | | 20 | 20 | 20 | 20 |
| Hardness (N/m²) | | 4133 | 4825 | 1269 | 21240 |
| Evaluation | Crushing property evaluation | ⊚ | ⊚ | ⊚ | × |
| | Oil separation evaluation 1 | ○ | ○ | ○ | - |
| | Oil separation evaluation 2 | ○ | ○ | ○ | - |
| | Sensory evaluation | ⊚ | ⊚ | × | - |

It is seen from the results in Tables 2 and 3 that jelly drinks (Examples 1 to 7) with a jelly hardness of 2861 to 5908 N/m² and containing an oil-and/or-fat in the form of a powdered oil-and/or-fat allowed jelly to be easily crushed, did not allow oil separation to occur, and were easily ingested due to their non-oily taste. On the other hand, a jelly drink of Comparative Example 1 with a jelly hardness of 1269 N/m² was not preferable as a jelly drink because the jelly was too soft and sticky. Note that a jelly drink of Comparative Example 2 with a jelly hardness of 21240 N/m² was not acceptable as a jelly drink because the jelly was too hard in the crushing property evaluation, and thus other evaluations were not performed thereon.

### [Ungelled Jelly Drink Preparation 2]

Next, jelly drinks not containing a powdered oil-and/or-fat but directly containing an oil-and/or-fat functioning as a raw material for the powdered oil-and/or-fat were prepared. First, powders of carrageenan, locust bean gum, trehalose, sugar, sodium caseinate, and dextrin that are powder raw materials in contents listed in Table 4 were mixed, and the mixture and an emulsifier were sequentially dissolved in hot water at 85°C. Next, the solution was kept at 70 to 75°C, a liquid sugar, a concentrated fruit juice, a citric acid, and an oil-and/or-fat (MCT1) were sequentially and uniformly dissolved therein, and the solution was sufficiently emulsified using a homogenizing disperser, so that ungelled jelly drinks were prepared. The sodium caseinate and dextrin in Table 4 were the same as the raw materials for the powdered oil-and/or-fat, and the emulsifier was a mixture of Homogen No.897 (manufactured by San-Ei Gen F.F.I., Inc.) and Poem J-0381V (manufactured by Riken Vitamin Co., Ltd.) in a mass ratio of 3 : 1.

### [Jelly Drink Evaluation 2]

Crushing property evaluation, oil separation evaluation, and sensory evaluation were performed on each of the thus prepared jelly drinks (Comparative Example 3 to 5) as in "Jelly Drink Evaluation 1". Table 4 shows the evaluation results.

**Table 4**

| | | Com.Ex. 3 | Com.Ex. 4 | Com.Ex. 5 |
|---|---|---|---|---|
| MCT 1 | | 15.00 | 20.00 | 20.00 |
| Sodium caseinate | | 2.00 | | |
| Dextrin | | 3.00 | | |
| Emulsifier | | | 0.5 | 1.0 |
| Carrageenan | | 0.15 | 0.10 | 0.10 |
| Locust bean gum | | 0.15 | 0.10 | 0.10 |
| Sugar | | 2.00 | 2.00 | 2.00 |
| Trehalose | | 10.00 | 10.00 | 10.00 |
| Concentrated fruit juice | | 2.00 | 2.00 | 2.00 |
| Liquid sugar | | 5.00 | 5.00 | 5.00 |
| Citric acid | | 0.10 | 0.10 | 0.10 |
| Water | | 60.60 | 60.20 | 59.70 |
| Total | | 100.0 | 100.0 | 100.0 |
| Calories (kcal/g) | | 2.18 | 2.48 | 2.54 |
| Content of oil-and/or-fat (% by mass) | | 15 | 20 | 20 |
| Hardness (N/m²) | | 3144 | 6243 | 6502 |
| Evaluation | Crushing property evaluation | ⊚ | ⊚ | ⊚ |
| | Oil separation evaluation 1 | × | × | ○ |
| | Oil separation evaluation 2 | × | × | ○ |
| | Sensory evaluation | × | × | ⊚ |

It is seen from the results in Table 4 that jelly drinks directly containing an oil-and/or-fat functioning as a raw material for a powdered oil-and/or-fat (Comparative Examples 3 and 4) had an appropriate hardness as a jelly drink, but allowed oil separation to occur, and were not easily ingested due to their oily taste during ingestion.

### [Storage Test of Jelly Drinks]

A storage test was performed on the jelly drinks of Example 3 and Comparative Example 5 with a content of oil-and/or-fat of 20% by mass. Specifically, ungelled jelly drinks of Example 3 and Comparative Example 5 were prepared as described above according to the contents listed in Tables 2 and 4. Next, 95 mL of each ungelled jelly drink (65 to 70°C) was filled into a 100-mL spout pouch container, the spout pouch container was tightly sealed, and the jelly drink was sterilized through boiling in a hot water at 80°C for 30 minutes. Then, gelling was caused by cooling the spout pouch container with running water (tap water) for 30 minutes, so that jelly drinks in spout pouch containers were produced.

Next, these jelly drinks whose jelly had been crushed by squeezing the spout pouch containers three times with a hand, and these jelly drinks without any processing (with gel whose shape had been retained) were stored in constant-temperature baths at 5°C and 40°C. The jelly was squeezed out of the spouts of the spout pouch containers after one week and four weeks, and oil separation was visually observed and evaluated according to the following evaluation criteria. Table 5 shows the evaluation results.

○: Oil particles are not seen on the jelly surface and syneresis portions thereof.
×: Oil particles are seen on the jelly surface or syneresis portions thereof.

**Table 5**

| | | Ex. 3 | Com.Ex. 5 |
|---|---|---|---|
| Tested when jelly has not been crushed | 5°C, stored for one week | ○ | × |
| | 5°C, stored for four weeks | ○ | × |
| | 40°C, stored for one week | ○ | × |
| | 40°C, stored for four weeks | ○ | × |
| Tested when jelly has been crushed | 5°C, stored for one week | ○ | × |
| | 5°C, stored for four weeks | ○ | × |
| | 40°C, stored for one week | ○ | × |
| | 40°C, stored for four weeks | ○ | × |

It is seen from the results in Table 5 that a jelly drink containing an oil-and/or-fat in the form of a powdered oil-and/or-fat (Example 3) did not allow oil separation to occur in either low temperature storage or high temperature storage regardless of whether or not the jelly had been crushed. On the other hand, in Comparative Example 5, oil separation did not occur immediately after production (Table 4), but oil separation occurred in both low temperature storage and high temperature storage regardless of whether or not the jelly had been crushed.

## Claims

1. A jelly drink comprising: 5 to 30% by mass of oil-and/or-fat; a gelling agent; and water, and having a hardness of 2000 to 20000 N/m²,
wherein the oil-and/or-fat is derived from a powdered oil-and/or-fat.

2. The jelly drink according to claim 1, wherein a content of the oil-and/or-fat in the powdered oil-and/or-fat is 50 to 85% by mass.

3. The jelly drink according to claim 1 or 2, wherein the oil-and/or-fat is a medium chain triglyceride.

4. A method for producing a jelly drink with a hardness of 2000 to 20000 N/m², comprising: heating and dissolving a powdered oil-and/or-fat and a gelling agent in water; and then solidifying the solution through cooling,
wherein a content of the powdered oil-and/or-fat that is a raw material is adjusted such that a content of the oil-and/or-fat in the obtained jelly drink is 5 to 30% by mass.
